# EUROPÄISCHE PATENTANMELDUNG

(11) **EP 1 688 544 A1**
(43) Veröffentlichungstag der Anmeldung: **09.08.2006**
(21) Anmeldenummer: 05002204.5
(22) Anmeldetag: 02.02.2005
(51) Int. Cl.: E02D 5/08

(54) **Verbindungsprofil und Kombispundwand mit einem derartigen Verbindungsprofil**

(71) Anmelder: PilePro LLC, Brooklyn, NY 11201 (US)
(72) Erfinder: Heindl, Richard, 80639 München (DE); Wendt, Rob R., Brooklyn, NY 11201 (US); Wall, Georg, 81375 München (DE)
(74) Vertreter: Weigel, Matthias

(57) **Zusammenfassung**

Die Erfindung betrifft ein Verbindungsprofil (10) mit gleichbleibender Querschnittsform zum Anschließen von Spundbohlen an Trägerelemente. Das Verbindungsprofil (10) weist eine Mittelleiste (12) auf, an der ein Aufnahmeprofil (16) zum Verbinden mit dem Trägerelement (102) und ein Anschlussprofil (14) zum Anschließen eines Schlosselementes der Spundbohle angeformt sind. Das Anschlussprofil (14) weist im Querschnitt gesehen einen zumindest annähernd rechtwinklig von der Mittelleiste (12) abstehenden, geraden Übergangsabschnitt (18) auf, der in einen halbkreisförmigen, in Richtung der Flachseite zeigenden Hakenabschnitt (20) übergeht, an welchen sich ein Endabschnitt (22) anschließt, so dass der Übergangsabschnitt (18), der Hakenabschnitt (20) und der Endabschnitt (22) gemeinsam mit der Flachseite der Mittelleiste (12) einen zur einen Seite hin offenen Aufnahmekanal (24) für das Schlosselement der Spundbohle bilden. Des weiteren betrifft die Erfindung eine Kombi-Spundwand, bei der das erfindungsgemäße Verbindungsprofil zum Einsatz kommt.

## Beschreibung

Die Erfindung betrifft ein Verbindungsprofil nach dem Oberbegriff des Anspruchs 1, das zum Anschließen von Spundbohlen an Trägerelemente, insbesondere an Doppel-T-Träger, für den Aufbau eine Kombi-Spundwand dient. Ferner betrifft die Erfindung eine Kombi-Spundwand nach dem Oberbegriff des Anspruchs 12, bei der zum Verbinden der Spundbohlen mit den Trägerelementen die erfindungsgemäßen Verbindungsprofile zum Einsatz kommen.

Verbindungsprofile der eingangs genannten Art werden insbesondere zum Aufbau sogenannter Kombi-Spundwände eingesetzt, wie sie beispielsweise aus der DE 297 18 052 U1, der EP 0 072 118 A1 oder auch der DE 103 8 769 A1 bekannt sind. Derartige Kombi-Spundwände werden insbesondere zum Errichten von Kaimauern, zur Uferabsicherung in Häfen und an Flüssen oder auch zur Abstützung von Böschungen und ähnliches verwendet. Die bekannten Kombi-Spundwände sind aus einer Vielzahl in den Boden gerammter Trägerelemente gebildet, zwischen denen jeweils mindestens eine Spundbohle, auch Füllbohle genannt, positioniert ist. Um eine geschlossene, wasserdichte Spundwand zu bilden, werden die Spundbohlen an ihren Längskanten durch Schlosselemente, wie Haken- oder Klauenleisten miteinander verbunden, während die unmittelbar benachbart zu den Trägerelementen angeordneten Spundbohlen mit den Trägerelementen durch die genannten Verbindungsprofile verbunden werden. Zum Befestigen des Verbindungsprofils an einem Trägerelement weist das Verbindungsprofil ein hierzu ausgelegtes Aufnahmeprofil auf. Das Anschließen eines der Schlosselemente der zu befestigenden Spundbohle erfolgt an einem Anschlussprofil des Verbindungsprofils. Das Verbindungsprofil hat eine gleichbleibende Querschnittsform und ist in seiner Länge an die Länge der miteinander zu verbindenden Spundbohlen und Trägerelemente angepasst.

Derzeit werden für derartige Kombi-Spundwände sogenannte warmgewalzte Spundbohlen verwendet, also Spundbohlen, die durch Warmumformung in die gewünschte Querschnittsform umgeformt worden sind. Kaltgewalzte Spundbohlen, die durch Kaltumformung in die gewünschte Querschnittsform umgeformt worden sind, können bisher nicht verwendet werden, obwohl sie im Vergleich zu warmgewalzten Spundbohlen kostengünstiger sind und sich durch eine verglichen mit warmgewalzten Spundbohlen bessere Oberflächenbeschaffenheit, insbesondere Oberflächenhärte, auszeichnen.

So besteht bei kaltgewalzten Spundbohlen das Problem, dass das Gefüge der Spundbohlen während des Kaltwalzvorganges in Abhängigkeit vom Umformgrad unterschiedlich stark verformt wird. Durch den unterschiedlichen Umformgrad zeigen kaltgewalzte Spundbohlen über deren Querschnitt betrachtet unterschiedliche Widerstandsmomente, Festigkeiten und Elastizitätseigenschaften. Aufgrund der über den Querschnitt der Spundbohlen betrachtet unterschiedlichen Materialeigenschaften der Spundbohlen war das Errichten von Kombi-Spundwänden aus kaltgewalzten Spundbohlen bisher nicht möglich. So bricht Material beim Einrammen der Spundbohlen häufig an den Stellen aus, an denen die Spundbohle während des Kaltwalzvorganges am stärksten umgeformt worden ist, also insbesondere im Bereich der am stärksten umgeformten Schlosselemente. Durch die Schlosselemente soll jedoch gerade eine sichere und insbesondere auch wasserdichte Verbindung zwischen dem Verbindungsprofil und der Spundbohle gewährleistet sein.

Ausgehend von diesem Stand der Technik war es nun Aufgabe der Erfindung, ein Verbindungsprofil bereitzustellen bzw. eine mit erfindungsgemäßen Verbindungsprofilen ausgestattete Kombi-Spundwand anzugeben, durch das bzw. bei der der Verbau sowohl warmgewalzter als auch kaltgewalzter Spundbohlen gleicherma-βen möglich ist.

Diese Aufgabe wird durch ein Verbindungsprofil mit den Merkmalen nach Anspruch 1 gelöst. Gemäß einem weiteren Aspekt der Erfindung wird diese Aufgabe durch eine Kombi-Spundwand mit den Merkmalen nach Anspruch 12 gelöst.

Bei dem erfindungsgemäßen Verbindungsprofil ist das Anschlussprofil für die Spundbohle im Querschnitt gesehen so gestaltet, dass die Mittelleiste gemeinsam mit dem Übergangsabschnitt, dem halbkreisförmigen Hakenabschnitt und dem Endabschnitt einen Aufnahmekanal für das Schlosselement der Spundbohle bildet, in dem das Schlosselement von allen Seiten gleichmäßig umgriffen ist. Hierdurch ist das mit dem Anschlussprofil in Eingriff kommende Schlosselement der Spundbohle beim Einrammen über eine große Oberfläche von mehreren Seiten her definiert abgestützt und geführt. Durch das großflächige Abstützen des Schlosselementes im Aufnahmekanal des Anschlussprofils wird erreicht, dass die beim Einrammen zwischen dem Anschlussprofil und dem Schlosselement entstehenden Kräfte verglichen mit herkömmlichen Anschlussprofilen auf eine größere Fläche verteilt werden. Hierdurch sind die beim Einrammen am Schlosselement der Spundbohle angreifenden Zug-, Druck- und Torsionsspannungen verglichen mit den bei Verwendung herkömmlicher Verbindungsprofile entstehenden Zug-, Druck- und Torsionsspannungen deutlich geringer, so dass insbesondere kaltgewalzte Spundbohle trotz deren verminderter Widerstandsmomente insbesondere im Bereich der Schlosselemente eine für das Einrammen ausreichende Festigkeit und Elastizität besitzen und deren Schlosselemente weder ausbrechen noch in anderer Weise beschädigt werden.

Weitere Vorteile und Weiterbildungen der Erfindung werden aus der nachfolgenden Beschreibung, der Zeichnung sowie den Unteransprüchen ersichtlich.

Damit das Schlosselement der Spundbohle möglichst großflächig abgestützt ist, wird bei einer besonders bevorzugten Ausführungsform des erfindungsgemäßen Verbindungsprofils vorgeschlagen, den Endabschnitt im Bezug auf den Übergangsabschnitt möglichst lang auszubilden. So hat sich in Simulationsversuchen gezeigt, dass eine besonders gute Stützwirkung für das Schlosselement erreicht wird, wenn die Länge des Endabschnittes im Verhältnis zur Länge des Übergangsabschnittes in einem Bereich von 1 : 2 bis 1 : 3 liegt.

Um ein sicheres und definiertes Führen des Schlosselementes im Aufnahmekanal zu gewährleisten, ist es von Vorteil, wenn der Innenradius des halbkreisförmigen Hakenabschnittes im Verhältnis zur Länge des Übergangsabschnittes in einem Bereich von 1 : 4 bis 1 : 5 liegt.

Bei einer besonders bevorzugten Ausführungsform des erfindungsgemäßen Verbindungsprofils ist an der mit dem Anschlussprofil versehenen Flachseite der Mittelleiste eine zumindest annähernd rechtwinklig von der Flachseite abstehende Stützleiste angeformt. Die Stützleiste ist dabei so relativ zum Aufnahmekanal positioniert, dass die Stützleiste die offene Seite des Aufnahmekanals teilweise überdeckt, bezogen auf den Endabschnitt des Anschlussprofils im Querschnitt gesehen an der Mittelleiste jedoch seitlich nach außen versetzt angeordnet ist. Mit Hilfe der Stützleiste wird ein unbeabsichtigtes Herausspringen oder Herausgleiten des Schlosselementes der Spundbohle aus dem Aufnahmekanal verhindert, wenn das Schlosselement ordnungsgemäß in den Aufnahmekanal eingehängt ist.

Die Stützleiste geht vorzugsweise mit ihrer nach außen zeigenden Flachseite in eine der beiden Längskanten der Mittelleiste über, wodurch die Ausbildung der Stützleiste während des Stranggießens oder Walzens des erfindungsgemäßen Verbindungsprofils erleichtert ist.

Um die gewünschte Wirkung der Stützleiste sicherzustellen, sollte die Stützleiste im Querschnitt des Verbindungsprofils gesehen eine bezogen auf die Länge des Übergangsabschnittes ausreichende Länge aufweisen, die jedoch so gering ist, dass das Einsetzen des Schlosselementes in den Aufnahmekanal nicht behindert ist. Das Verhältnis der Länge der Stützleiste zur Länge des Übergangsabschnittes liegt hierzu vorzugsweise in einem Bereich von 1 : 4 bis 1 : 5.

Werden zum Errichten der Kombi-Spundwände sogenannte Keulen-Träger als Trägerelemente eingesetzt, also Doppel-T-Träger, deren Balkenenden zumindest abschnittsweise mit im Querschnitt gesehen keilförmigen Halteabschnitten versehen sind, wird die Verwendung einer Ausführungsform des erfindungsgemäßen Verbindungsprofils vorgeschlagen, bei der das Aufnahmeprofil im Querschnitt des Verbindungsprofils gesehen zwei von der Mittelleiste abstehende Halteleisten aufweist, zwischen die der Keulen-Träger mit seinem im Querschnitt keilförmigen Halteabschnitt einzuführen ist. Die erste der Halteleisten steht dabei etwa rechtwinklig von der Mittelleiste des Verbindungsprofils ab, während die zweite der Halteleisten in Richtung der ersten Halteleiste unter einem Winkel geneigt von der Mittelleiste absteht. Durch das so gestaltete Aufnahmeprofil ist eine sichere und definierte Verbindung des Verbindungsprofils mit dem Keulen-Träger oder mit entsprechend gestalteten Trägerelementen gewährleistet.

Da die Öffnung des Aufnahmekanals, durch die das Schlosselement der Spundbohle in den Aufnahmekanal ragt, seitlich am Anschlussprofil ausgebildet ist, der Keulen-Träger jedoch die Position des Verbindungsprofils vorgibt, werden erfindungsgemäß zwei alternative Weiterbildungen der zuvor beschriebenen Ausführungsform vorgeschlagen. Bei einer der beiden Weiterbildungen ist die unter einem Winkel geneigt zur Mittelleiste verlaufende Halteleiste des Aufnahmeprofils unmittelbar benachbart zu der Längskante der Mittelleiste ausgeformt, nahe der der Übergangsabschnitt des Anschlussprofils ausgeformt ist. Bei der alternativen Weiterbildung ist die zumindest annähernd rechtwinklig zur Mittelleiste verlaufende Halteleiste des Aufnahmeprofils unmittelbar benachbart zu der Längskante der Mittelleiste ausgeformt, nahe der der Übergangsabschnitt des Anschlussprofils ausgeformt ist.

Als weitere Möglichkeit wird vorgeschlagen, die Halteleisten des am Trägerelement zu befestigenden Aufnahmeprofils so auszubilden, dass beide Halteleisten bezogen auf die Mittelleiste des Verbindungsprofils unter einem Winkel geneigt aufeinander derart zulaufen, dass ein im Querschnitt gesehen, in Form eines gleichschenkligen Dreiecks ausgebildeter Kanal gebildet ist. Auf diese Weise kann das Verbindungsprofil mit der Öffnung seines Anschlussprofils sowohl vom Trägerelement wegzeigend als auch zum Trägerelement hin zugewandt mit diesem verbunden werden, ohne dass hierzu zwei unterschiedlich ausgebildete Verbindungsprofile bereitgestellt werden müssen.

Wird als Trägerelement beispielsweise ein herkömmlicher Doppel-T-Träger verwendet, weist das Aufnahmeprofil im Querschnitt des Verbindungsprofils gesehen zwei von der Mittelleiste abstehende, zumindest annähernd parallel zueinander verlaufende Halteleisten auf, zwischen die das Trägerelement mit seinem Halteabschnitt einzuführen ist. Zum Befestigen kann das Verbindungsprofil mit dem Trägerelement gegebenenfalls zusätzlich verschweißt werden.

Ferner ist es denkbar, das am Verbindungsprofil ausgebildete Aufnahmeprofil so zu gestalten, dass es unmittelbar auf die Oberfläche des Trägerelementes aufgesetzt und mit diesem verschweißt wird. Ein derartig gestaltetes erfindungsgemäß Verbindungsprofil, auch Anschweißprofil genannt, kommt beispielsweise dann zum Einsatz, wenn als Trägerelement ein Rohr verwendet wird, mit dessen Außenoberfläche das Verbindungsprofil verschweißt werden kann.

Um die Fertigung des erfindungsgemäßen Verbindungsprofils zu erleichtern, wird auch hier vorgeschlagen, die beiden Halteleisten so auszubilden, dass sie mit ihren nach außen zeigenden Flachseiten in die beiden Längskanten der Mittelleiste übergehen, um Hinterschneidungen zu vermeiden.

Gemäß einem weiteren Aspekt betrifft die Erfindung eine Kombi-Spundwand mit den Merkmalen nach Anspruch 12. Die erfindungsgemäße Kombi-Spundwand ist aus Trägerelementen, insbesondere Doppel-T-Trägern, und jeweils mindestens einer zwischen zwei Trägerelementen angeordneten Spundbohle gebildet, wobei zum miteinander Verbinden der Trägerelemente mit der Spundbohle ein zwischen diesen angeordnetes Verbindungsprofil vorgesehen ist, an welchem ein mit einem an der Spundbohle ausgebildeten Schlosselement in Eingriff stehendes Anschlussprofil ausgebildet ist. Erfindungsgemäß handelt es ist bei zumindest einer der Spundbohlen um eine kaltgewalzte Spundbohle, wobei zumindest das jeweils mit dem Schlosselement der kaltgewalzten Spundbohle in Eingriff stehende Anschlussprofil des Verbindungsprofils derart ausgebildet ist, dass das Anschlussprofil das Schlosselement der kaltgewalzten Spundwand teilweise umgreift und großflächig abstützt. Als Spundbohlen kommen sowohl U-förmige als auch Z-förmige kaltgewalzte Spundbohlen zum Einsatz. Ferner wird bei einer Weiterbildung der erfindungsgemäßen Kombi-Spundwand ais kaltgewalzten Spundbohlen vorgeschlagen, ein Verbindungsprofil zu verwenden, das entsprechend einem der Ansprüche 1 bis 11 ausgebildet ist.

Das Schlosselement, mit dem die Spundbohle am Verbindungsprofil befestigt werden kann, weist vorzugsweise eine im Querschnitt gesehen halbkreisförmige Hakenleiste auf, welche mit dem Hakenabschnitt des Anschlussprofils in Eingriff steht. Auf diese Weise wird eine sichere Verbindung der Spundbohle mit dem Verbindungsprofil erreicht.

Die für die Kombi-Spundwand verwendeten Trägerelemente sind vorzugsweise warmgewalzte Trägerelemente, um ein ausreichendes Widerstandesmoment für die Kombi-Spundwand zu gewährleisten.

Die Erfindung wird nachfolgend anhand mehrerer Ausführungsbeispiele unter Bezugnahme auf die beigefügte Zeichnung näher erläutert. Darin zeigt:
- Fig. 1: eine Draufsicht auf die Stirnseite eines ersten Ausführungsbeispiels eines erfindungsgemäßen Verbindungsprofils,
- Fig. 2: eine Draufsicht auf die Stirnseite einer Weiterbildung des in Fig. 1 gezeigten erfindungsgemäßen Verbindungsprofils, bei dem eine zusätzliche Stützleiste ausgebildet ist,
- Fig. 3: eine Draufsicht auf die Stirnseite eines zweiten Ausführungsbeispiels eines erfindungsgemäßen Verbindungsprofils, das zum Befestigen an einem Keulen-Träger ausgelegt ist,
- Fig. 4: eine Draufsicht auf die Stirnseite einer Weiterbildung des in Fig. 3 gezeigten erfindungsgemäßen Verbindungsprofils,
- Fig. 5: eine Draufsicht auf eine Kombi-Spundwand, bei der die Spundbohlen durch Verbindungsprofile, wie sie in Fig. 2 gezeigt sind, an Doppel-T-Trägern befestigt sind,
- Fig. 6: einen vergrößerten Ausschnitt der Kombi-Spundwand nach Fig: 5, in dem in Draufsicht ein zwischen einer Spundbohle und einem Doppel-T-Träger angeordnetes erfindungsgemäßes Verbindungsprofil gezeigt ist,
- Fig. 7: eine Draufsicht auf eine Kombi-Spundwand, bei der die Spundwände durch Verbindungsprofile, wie sie in den Fig. 3 und 4 gezeigt sind, an Keulen-Trägern befestigt sind, und
- Fig. 8: einen vergrößerten Ausschnitt der Kombi-Spundwand nach Fig. 7, in dem in Draufsicht ein zwischen einer Spundbohle und einem Keulen-Träger angeordnetes erfindungsgemäßes Verbindungsprofil gezeigt ist.

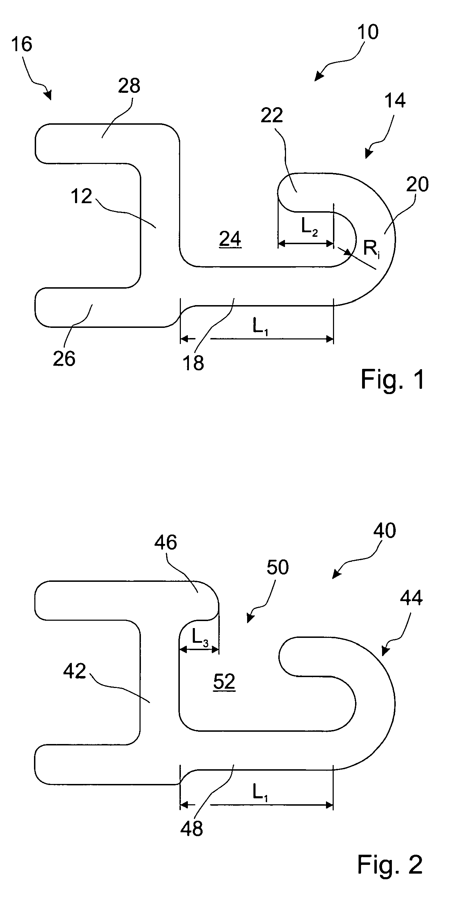

In Fig. 1 ist in Draufsicht die Stirnseite eines ersten Ausführungsbeispiels eines erfindungsgemäßen Verbindungsprofils 10 gezeigt, mit dem zur Bildung sogenannter Kombi-Spundwände Spundbohlen mit Trägerelementen verbunden werden. Das Verbindungsprofil 10 hat eine gleichbleibende Querschnittsform und ist in seiner Länge an die Länge der miteinander zu verbindenden Spundbohlen und Trägerelemente angepasst. Das Verbindungsprofil 10 hat eine Mittelleiste 12, an der ein Anschlussprofil 14 und ein Aufnahmeprofil 16 angeformt sind. Während das Anschlussprofil 14 zum Einhängen eines Schlosselementes der Spundbohle dient, wird das Aufnahmeprofil 16 zum Befestigen des Verbindungsprofils 10 an dem Trägerelement eingesetzt, wie später noch erläutert wird.

Das Anschlussprofil 14 weist einen nahe der einen Längskante der Mittelleiste 12 von der Mittelleiste 12 etwa rechtwinklig abstehenden Übergangsabschnitt 18 auf, der in einen zumindest annähernd halbkreisförmig in Richtung der Mittelleiste 12 verlaufenden Hakenabschnitt 20 übergeht. Das Ende des Hakenabschnittes 20 geht in einen Endabschnitt 22 über, welcher parallel zum Übergangsabschnitt 18 verläuft. Das Verhältnis des Innenradius Rᵢ des gebogenen Hakenabschnittes 20 zur Länge L₁ des Übergangsabschnittes liegt hier bei ca. 1 : 4. Das Verhältnis der Länge L₂ des Endabschnittes 22 zur Länge L₁ des Übergangsabschnittes 18 entspricht etwa dem Verhältnis 1 : 3. So hat im dargestellten Ausführungsbeispiel der Übergangsabschnitt 18 beispielsweise eine Länge L₁ von 38mm, während der Innenradius Rᵢ des Hakenabschnittes 20 eine Abmessung von 7mm und der Endabschnitt 22 eine Länge L₂ von etwa 13mm hat.

Durch das so gestaltete Anschlussprofil 14 ist ein in Längsrichtung des Verbindungsprofils 10 verlaufender, zur einen Seite hin offener Aufnahmekanal 24 gebildet, in welchen das Schlosselement der Spundbohle zum Verbinden mit dem Verbindungsprofil 10 eingehängt wird.

Das Aufnahmeprofil 16 hat zwei gleichfalls etwa rechtwinklig von der Mittelleiste 12 abstehende Halteleisten 26 und 28, welche in die Längskanten der Mittelleiste 12 bündig übergehen. Die beiden Halteleisten 26 und 28 verlaufen parallel zueinander und haben zumindest annähernd dieselbe Länge. Zum Befestigen wird das Trägerelement, beispielsweise ein Doppel-T-Träger, mit einem im Querschnitt etwa rechteckigen oder quadratischen Halteabschnitt zwischen die Halteleisten 26 und 28 eingeführt. Gegebenenfalls wird das Verbindungsprofil 10 durch Verschweißen zumindest einer der Halteleisten 26 und 28 an dem Halteabschnitt des Trägerelementes zusätzlich gesichert.

In Fig. 2 ist eine Weiterbildung des in Fig. 1 gezeigten Verbindungsprofils 10 gezeigt. Bei diesem Verbindungsprofil 40 ist an der Flachseite der Mittelleiste 42, an der das Anschlussprofil 44 angeformt ist, zusätzlich eine Stützleiste 46 angeformt, die gleichfalls etwa rechtwinklig zur Flachseite der Mittelleiste 42 und damit parallel zum Übergangsabschnitt 48 des Anschlussprofils 44 verläuft und bündig in eine der beiden Längskanten der Mittelleiste 42 übergeht. Die Stützleiste 46 ist derart relativ zum Anschlussprofil 44 an der Mittelleiste 42 angeformt, dass die Stützleiste 46 in den Öffnungsbereich 50 des Aufnahmekanals 52 des Anschlussprofils 44 ragt und diesen teilweise überdeckt, das Einführen des Schlosselementes in den Aufnahmekanal 52 jedoch nicht behindert. Die Länge L₃ der Stützleiste 46 ist dabei so gewählt, dass das Verhältnis zwischen der Länge L₃ der Stützleiste 46 und der Länge L₁ des Übergangsabschnittes 48 etwa bei 1 : 4 liegt, in der dargestellten Weiterbildung also eine Länge L₃ von etwa 10 mm hat.

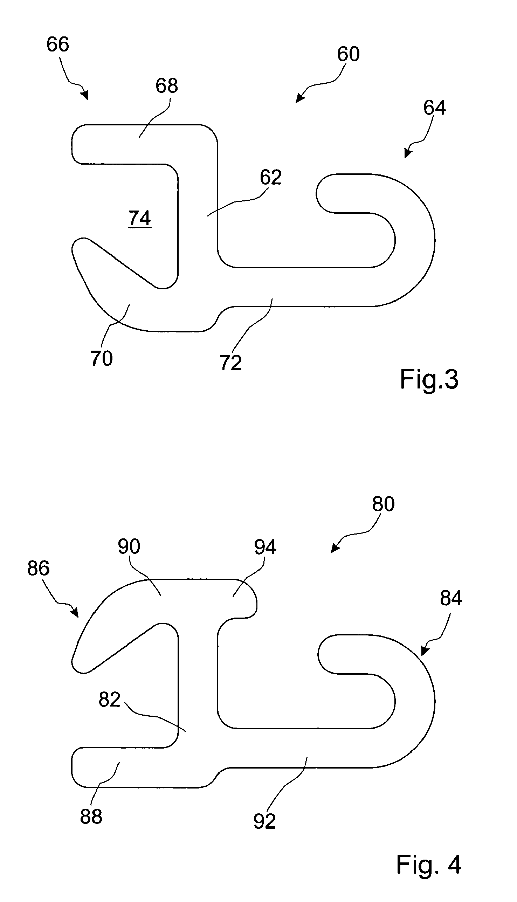

In Fig. 3 ist ein zweites Ausführungsbeispiel eines erfindungsgemäßen Verbindungsprofils 60 gezeigt. Das Verbindungsprofil 60 hat gleichfalls eine Mittelleiste 62, an der ein Anschlussprofil 64 und ein Aufnahmeprofil 66 angeformt sind. Das Anschlussprofil 64 entspricht in seiner Ausbildung dem in den Fig. 1 bzw. 2 gezeigten Anschlussprofil 14 bzw. 44, so dass eine weiter Beschreibung des Anschlussprofils 64 entfallen kann.

Das Aufnahmeprofil 66 hat gleichfalls zwei Halteleisten 68 und 70, wobei die erste Halteleiste 68, die an der vom Übergangsabschnitt 72 entfernt ausgebildeten Längskante der Mittelleiste 62 angeformt ist, etwa rechtwinklig von der Flachseite der Mittelleiste 62 absteht. Die zweite Halteleiste 70, welche unmittelbar benachbart zum Übergangsabschnitt 72 von der Mittelleiste 62 absteht, verläuft dagegen unter einem Winkel von ca. 45° geneigt zur Flachseite der Mitteleiste 62 auf die erste Halteleiste 68 zu und endet etwa auf gleicher Höhe wie die erste Halteleiste 68. Hierdurch ist ein im Querschnitt etwa dreieckiger Haltekanal 74 gebildet, der zur Aufnahme eines im Querschnitt etwa keilförmigen Halteabschnittes eines sogenannten Keulen-Trägers dient, wie später noch erläutert wird.

Fig. 4 zeigt in Draufsicht ein Verbindungsprofil 80, eine Weiterbildung des in Fig. 3 gezeigten Verbindungsprofils 60. Das Verbindungsprofil 80 weist gleichfalls eine Mittelleiste 82 auf, an der ein Anschlussprofil 84 sowie ein Aufnahmeprofil 86 ausgebildet ist. Bei dem Verbindungsprofil 80 sind jedoch die beiden Halteleisten 88 und 90 des Aufnahmeprofils 86 verglichen mit dem Verbindungsprofil 60 spiegelverkehrt an der Mittelleiste 82 ausgebildet, so dass die nahe dem Übergangsabschnitt 92 des Anschlussprofils 84 angeformte Halteleiste 88 rechtwinklig zur Längsrichtung der Mittelleiste 82 verläuft, während die Halteleiste 90 unter einem Winkel von etwa 45° zur ersten Halteleiste 88 hin geneigt verläuft. Durch diese spiegelverkehrte Gestaltung kann das Verbindungsprofil 80 spiegelverkehrt an einem Keulen-Träger befestigt werden, so dass das Anschlussprofil 84 verglichen mit dem Anschlussprofil 64 des Verbindungsprofils 60 in die entgegengesetzte Richtung zeigend am Keulen-Träger befestigt werden kann. Nahe der Halteleiste 90 ist, wie bei dem in Fig. 2 gezeigten Verbindungsprofil 40, zusätzlich eine Stützleiste 94 vorgesehen, welche mit dem Anschlussprofil 84 in der unter Bezugnahme auf Fig. 2 beschriebenen Weise zusammenwirkt.

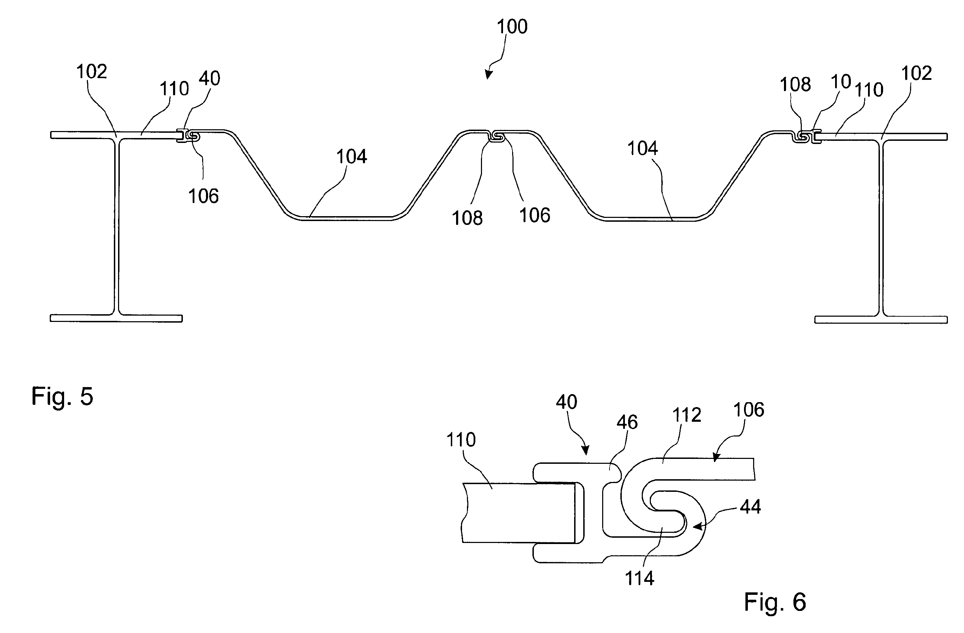

In Fig. 5 ist in Draufsicht ein Abschnitt einer Kombi-Spundwand 100 gezeigt, die aus mehreren Doppel-T-Trägern 102 und jeweils zwei zwischen zwei der Doppel-T-Träger 102 angeordneten, kaltgewalzten U-Spundbohlen 104 gebildet ist. Die U-Spundbohlen 104 sind durch Schlosselemente 106 und 108 untereinander verbunden. Zum Befestigen der U-Spundbohlen 104 an den Doppel-T-Trägern 102 kommen die in den Fig. 1 und 2 gezeigten Verbindungsprofile 10 und 40 zum Einsatz, wobei das Verbindungsprofil 10 mit seinem Anschlussprofil 14 nach innen zeigend an dem in Fig. 5 rechts gezeigten Doppel-T-Träger 102 befestigt ist.

Die Doppel-T-Träger 102 sind in herkömmlicher Weise ausgebildet und weisen zwei im Querschnitt gesehen etwa rechteckige T-Balken 110 auf. Wie insbesondere Fig. 6 zeigt, in der ein vergrößerter Ausschnitt der Fig. 5 gezeigt ist, ist an dem freien Ende des T-Balkens 110 des in Fig. 5 links gezeigten Doppel-T-Trägers 102 das erfindungsgemäße Verbindungsprofil 40 befestigt, welches mit seinem Aufnahmeprofil auf das Ende des T-Balkens 110 aufgesteckt ist.
Die beiden Schlosselemente 106 und 108 der U-Spundbohlen 104 sind im wesentlichen identisch ausgebildet und weisen als wesentliches Verbindungselement einen geraden Halteabschnitt 112 auf, welcher in eine halbkreisförmig gebogene Hakenleiste 114 übergeht. Die Länge des Halteabschnitts 112 sowie der Innenradius der Hakenleiste 114 sind dabei so bemessen, dass das Schlosselement 106 bzw. 108 sicher in dem Anschlussprofil 44 der Verbindungsprofils 40 gehalten ist und sich in diesem ordnungsgemäß abstützen kann, wobei die nahe dem Anschlussprofil 44 ausgebildete Stützleiste 46 ein Herausrutschen des Schlosselementes 106 aus dem Aufnahmekanal 52 verhindert.

An Stelle des in den Fig. 5 und 6 gezeigten Verbindungsprofils 40 kann in gleicher Weise auch das Verbindungsprofil 10 verwendet werden. Des weiteren können auch U-Spundbohlen oder Z-Spundbohlen zum Einsatz kommen die durch Warmwalzen hergestellt worden sind.

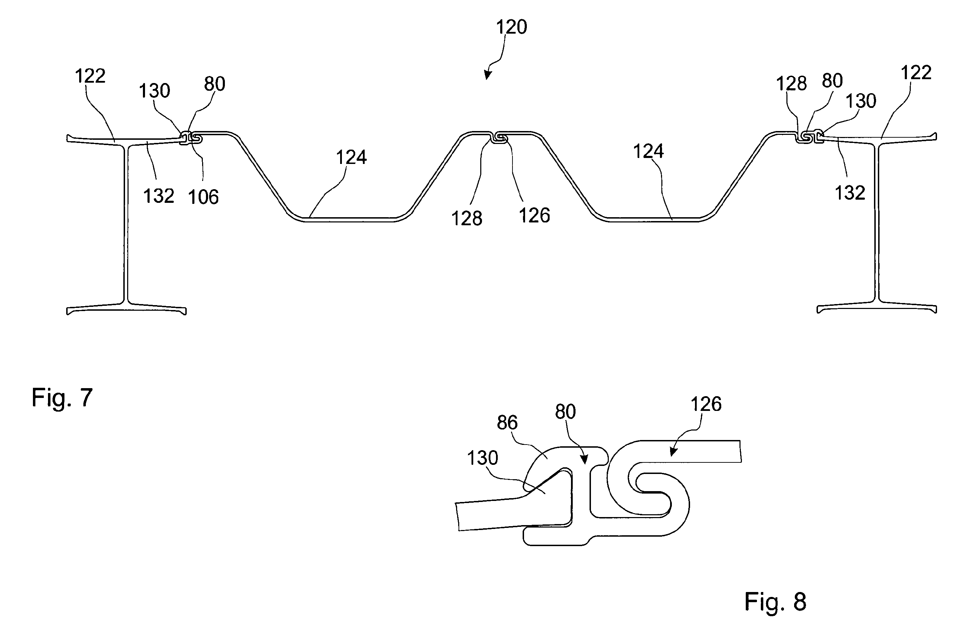

In Fig. 7 ist ein Abschnitt einer zweiten Ausführungsform einer Kombi-Spundwand 120 gezeigt. Die Kombi-Spundwand 120 weist mehrere Keulen-Träger 122 als Trägerelemente auf, wobei zwischen jeweils zwei nebeneinander angeordneten Keulen-Trägern 122 jeweils zwei U-Spundbohlen 124 eingesetzt sind. Die U-Spundbohlen 124 entsprechen den zuvor bereits beschriebenen U-Spundbohlen 104 und sind gleichfalls durch entsprechend gestaltete Schlosselemente 126 und 128 miteinander verbunden.

Zum Sichern der U-Spundbohlen 124 an den beiden Keulen-Trägern 122 kommen die beiden unter Bezugnahme auf die beiden Fig. 3 und 4 zuvor beschriebenen Verbindungsprofile 60 und 80 zum Einsatz. Wie insbesondere Fig. 7 zeigt, wird durch den Einsatz der beiden sich unterscheidenden Verbindungsprofile 60 und 80 ein problemloses Verbinden der U-Spundbohlen 124 an den Keulen-Trägern 122 möglich. Dabei ist das jeweils eine Schlosselement 126 der Spundbohlen 124 mit seiner Hakenleiste nach innen gewandt positioniert, während das andere Schlosselement 128 nach außen zeigt.

Um das nach außen zeigende Schlosselement 128 an dem einen Keulen-Träger 122 zu befestigen, wird das Verbindungsprofil 60 verwendet, welches aufgrund der Gestaltung des Aufnahmeprofils 66 mit seinem Anschlussprofil 64 nach innen zeigend am Keulen-Träger 122 befestigt werden kann, während im Gegensatz hierzu das Verbindungsprofil 80 mit seinem Anschlussprofil 84 nach außen zeigend am anderen Keulen-Träger 122 befestigt ist.

In Fig. 8 ist in vergrößerter Darstellung ein Ausschnitt der Kombi-Spundwand 120 gezeigt, in dem das mit dem einen der Keulen-Träger 122 und einer der U-Spundbohlen 124 in Eingriff stehende Verbindungsprofil 60 gezeigt ist. Das Verbindungsprofil 60 ist mit seinen Aufnahmeprofil 86 auf einen sich im Querschnitt keilförmig erweiternden Halteabschnitt 130 aufgesteckt, welcher am Ende des einen der T-Balken 132 des Keulen-Trägers 122 ausgebildet ist, so dass das Verbindungsprofil 80 in einer definierten Position am Keulen-Träger 122 gehalten ist. Das Anschlussprofil 64 steht mit dem Schlosselement 126 der U-Spundbohle 124 so in Eingriff, wie es zuvor bereits unter Bezugnahme auf die Kombi-Spundwand 100 beschrieben wurde. In entsprechender Weise ist die Spundbohle 124 am anderen Keulen-Träger 122 über das Verbindungsprofil 60 gesichert.

### Bezugszeichenliste:

- 10: Verbindungsprofil
- 12: Mittelleiste
- 14: Anschlussprofil
- 16: Aufnahmeprofil
- 18: Übergangsabschnitt
- 20: Hakenabschnitt
- 22: Endabschnitt
- L₁: Länge des Übergangsabschnittes
- Rᵢ: Innenradius des Hakenabschnittes
- L₂: Länge des Endabschnittes
- 24: Aufnahmekanal
- 26: Halteleiste
- 28: Halteleiste

- 40: Verbindungsprofil
- 42: Mittelleiste
- 44: Anschlussprofil
- 46: Stützleiste
- 48: Übergangsabschnitt
- 50: Öffnungsbereich
- 52: Aufnahmekanal

- 60: Verbindungsprofil
- 62: Mittelleiste
- 64: Anschlussprofil
- 66: Aufnahmeprofil

- 68: erste Halteleiste
- 70: zweite Halteleiste
- 72: Übergangsabschnitt
- 74: Haltekanal

- 80: Verbindungsprofil
- 82: Mittelleiste
- 84: Anschlussprofil
- 86: Aufnahmeprofil
- 88: erste Halteleiste
- 90: zweite Halteleiste
- 92: Übergangsabschnitt
- 94: Stützleiste

- 100: Kombi-Spundwand
- 102: Doppel-T-Träger
- 104: U-Spundbohlen
- 106: Schlosselement
- 108: Schlosselement
- 110: T-Balken
- 112: Halteabschnitt
- 114: Hakenleiste

- 120: Kombi-Spundwand
- 122: Keulen-Träger
- 124: U-Spundbohlen
- 126: Schlosselement
- 128: Schlosselement
- 130: keilförmiger Halteabschnitt
- 132: T-Balken

## Patentansprüche

1. Verbindungsprofil mit gleichbleibender Querschnittsform zum Anschließen von Spundbohlen an Trägerelemente, insbesondere an Doppel-T-Träger, für den Aufbau einer Kombi-Spundwand aus Trägerelementen (102; 122) und jeweils mindestens einer zwischen zwei Trägerelementen (102; 122) angeordneten Spundbohle (104; 124), wobei das Verbindungsprofil (10; 40; 60; 80) eine Mittelleiste (12; 42; 62; 82) aufweist, an der ein Aufnahmeprofil (16; 66; 86) zum Verbinden mit dem Trägerelement (102; 122) und ein Anschlussprofil (14; 44; 64; 84) zum Anschließen eines Schlosselementes (106, 108; 126, 128) der Spundbohle (104; 124) angeformt sind,
**dadurch gekennzeichnet,**
**dass** das Anschlussprofil (14; 44; 64; 84) für die Spundbohle (104; 124) im Querschnitt gesehen einen zumindest annähernd rechtwinklig von einer der Flachseiten der Mittelleiste (12; 42; 62; 82) abstehenden, geraden Übergangsabschnitt (18; 48; 72; 92) aufweist, der in einen im Querschnitt halbkreisförmigen, in Richtung der Flachseite zeigenden Hakenabschnitt (20) übergeht, an welchen sich ein Endabschnitt (22) anschließt, so dass der Übergangsabschnitt (18; 48; 72; 92), der Hakenabschnitt (20) und der Endabschnitt (22) gemeinsam mit der Flachseite der Mittelleiste (12; 42; 62; 82) einen zur einen Seite hin offenen Aufnahmekanal (24; 52) für das Schlosselement (106, 108; 126, 128) der Spundbohle (104; 124) bilden.

2. Verbindungsprofil nach Anspruch 1, **dadurch gekennzeichnet, dass** der Endabschnitt (22) parallel zum Übergangsabschnitt (18) verläuft und das Verhältnis der Länge (L₂) des Endabschnittes (22) zur Länge (L₁) des Übergangsabschnittes (18) in einem Bereich von 1 : 2 bis 1 : 3 liegt.

3. Verbindungsprofil nach Anspruch 1 oder 2, **dadurch gekennzeichnet, dass** das Verhältnis des Innenradius (Rᵢ) des halbkreisförmigen Hakenabschnittes (20) zur Länge (L₁) des Übergangsabschnittes (18) in einem Bereich von 1 : 4 bis 1 : 5 liegt.

4. Verbindungsprofil nach Anspruch 1, 2 oder 3, **dadurch gekennzeichnet, dass** im Querschnitt des Verbindungsprofils (40; 80) gesehen an der mit dem Anschlussprofil (44; 84) versehenen Flachseite der Mittelleiste (42; 82) eine zumindest annähernd rechtwinklig von der Flachseite abstehende Stützleiste (46) angeformt ist, welche die offene Seite des Aufnahmekanals (52) teilweise überdeckt und bezogen auf den Endabschnitt des Anschlussprofils (44; 84) im Querschnitt gesehen an der Mittelleiste (42; 82) seitlich nach außen versetzt angeordnet ist.

5. Verbindungsprofil nach Anspruch 4, **dadurch gekennzeichnet, dass** die Stützleiste (46) mit ihrer nach außen zeigenden Flachseite in eine der beiden Längskanten der Mittelleiste (42; 82) übergeht.

6. Verbindungsprofil nach Anspruch 4 oder 5, **dadurch gekennzeichnet, dass** die Stützleiste (46) parallel zum Übergangsabschnitt (48) verläuft und das Verhältnis der Länge (L₃) der Stützleiste (46) zur Länge (L₁) des Übergangsabschnittes (48) in einem Bereich von 1 : 4 bis 1 : 5 liegt.

7. Verbindungsprofil nach einem der Ansprüche 1 bis 6, **dadurch gekennzeichnet, dass** das Aufnahmeprofil (66; 86) im Querschnitt des Verbindungsprofils (60; 80) gesehen zwei von der Mittelleiste (62; 82) abstehende Halteleisten (68, 70; 88, 90) aufweist, zwischen die das Trägerelement (122) mit einem im Querschnitt keilförmigen Halteabschnitt (130) einzuführen ist, wobei die erste der Halteleisten (68; 88) etwa rechtwinklig von der Mittelleiste (62; 82) des Verbindungsprofils (60; 80) absteht, während die zweite der Halteleisten (70; 90) in Richtung der ersten Halteleiste (68; 88) unter einem Winkel geneigt von der der ersten Halteleiste (68; 88) unter einem Winkel geneigt von der Mittelleiste (62; 82) absteht.

8. Verbindungsprofil nach Anspruch 7, **dadurch gekennzeichnet, dass** die unter einem Winkel geneigt zur Mittelleiste (62) verlaufende Halteleiste (70) des Aufnahmeprofils (66) unmittelbar benachbart zu der Längskante der Mittelleiste (62) ausgeformt ist, nahe der der Übergangsabschnitt (72) des Anschlussprofils (64) ausgeformt ist.

9. Verbindungsprofil nach Anspruch 7, **dadurch gekennzeichnet, dass** die zumindest annähernd rechtwinklig zur Mittelleiste (82) verlaufende Halteleiste (88) des Aufnahmeprofils (86) unmittelbar benachbart zu der Längskante der Mittelleiste (82) ausgeformt ist, nahe der der Übergangsabschnitt des Anschlussprofils (84) ausgeformt ist.

10. Verbindungsprofil nach einem der Ansprüche 1 bis 6, **dadurch gekennzeichnet, dass** das Aufnahmeprofil (16) im Querschnitt des Verbindungsprofils (10; 40) gesehen zwei von der Mittelleiste (12; 42) abstehende, zumindest annähernd parallel zueinander verlaufende Halteleisten (26, 28) aufweist, zwischen die das Trägerelement (102) mit einem Halteabschnitt einzuführen ist.

11. Verbindungsprofil nach einem der Ansprüche 7 bis 10, **dadurch gekennzeichnet, dass** die beiden Halteleisten (26, 28) des Aufnahmeprofils (14) mit ihren nach außen zeigenden Flachseiten in die beiden Längskanten der Mittelleiste (12) übergehen.

12. Kombi-Spundwand, die aus Trägerelementen, insbesondere Doppel-T-Trägern, und jeweils mindestens einer zwischen zwei Trägerelementen (102; 122) angeordneten Spundbohle (104; 124) gebildet ist, wobei zum miteinander Verbinden der Trägerelemente (102; 122) mit der Spundbohle (104; 124) ein zwischen diesen angeordnetes Verbindungsprofil (10; 40; 60; 80) vorgesehen ist, an welchem ein mit einem an der Spundbohle (104; 124) ausgebildeten Schlosselement (106, 108; 126, 128) in Eingriff stehendes Anschlussprofil (14; 44; 64; 84) ausgebildet ist,
**dadurch gekennzeichnet,**
**dass** zumindest ein Teil der die Kombi-Spundwand (100; 120) bildenden Spundbohlen kaltgewalzte Spundbohlen (104; 124) sind, und
**dass** zumindest jeweils das mit dem Schlosselement (106, 108; 126, 128) in Eingriff stehende Anschlussprofil (14; 44; 64; 84) des Verbindungsprofils (10; 40; 60; 80) derart ausgebildet ist, dass das Anschlussprofil (14; 44; 64; 84) das Schlosselement (16, 108; 126, 128) teilweise umgreift und großflächig abstützt.

13. Kombi-Spundwand nach Anspruch 12, **dadurch gekennzeichnet, dass** als Verbindungsprofil ein Verbindungsprofil (10; 40; 60; 80) nach einem der vorhergehenden Ansprüche 1 bis 11 dient.

14. Kombi-Spundwand nach Anspruch 13, **dadurch gekennzeichnet, dass** die Spundbohle (104; 124) als Schlosselement (106, 108; 126, 128) zum Verbinden mit dem Anschlussprofil (14; 44; 64; 84) eine im Querschnitt gesehen zumindest annähernd halbkreisförmige Hakenleiste (114) aufweist, welche mit dem Hakenabschnitt (20) des Anschlussprofils (14; 44; 64; 84) in Eingriff steht.

15. Kombi-Spundwand nach Anspruch 12, 13 oder 14, **dadurch gekennzeichnet, dass** an den Trägerelementen (122) zum Verbinden mit den Aufnahmeprofilen (66; 86) der Verbindungsprofile (60; 80) im Querschnitt gesehen keilförmige Halteabschnitte (130) ausgebildet sind, und dass das Aufnahmeprofil (66; 86) jedes Verbindungsprofils (60; 80) im Querschnitt gesehen zwei von der Mittelleiste (62; 82) des Verbindungsprofils (60; 80) abstehende Halteleisten (68, 70; 88, 90) aufweist, zwischen die das Trägerelement (122) mit seinem im Querschnitt keilförmigen Halteabschnitt (130) eingeführt ist.

16. Kombi-Spundwand nach Anspruch 15, **dadurch gekennzeichnet, dass** die erste der Halteleisten (68; 88) etwa rechtwinklig von der Mittelleiste (62; 82) des Verbindungsprofils (60; 80) absteht, während die zweite der Halteleisten (70; 90) in Richtung der ersten Halteleiste (68; 88) unter einem Winkel geneigt von der Mittelleiste (62; 82) absteht.

17. Kombi-Spundwand nach Anspruch 12, 13 oder 14, **dadurch gekennzeichnet, dass** an den Trägerelementen (102) zum Verbinden mit den Aufnahmeprofilen (16; 46) der Verbindungsprofile (10; 40) im Querschnitt gesehen rechteckige Halteabschnitte ausgebildet sind, und dass das Aufnahmeprofil (16; 46) jedes Verbindungsprofils (10; 40) im Querschnitt gesehen zwei von der Mittelleiste (12; 42) des Verbindungsprofils (10; 40) abstehende, parallel zueinander verlaufende Halteleisten (26, 28) aufweist, zwischen die das Trägerelement (102) mit seinem Halteabschnitt eingeführt ist.

18. Kombi-Spundwand nach einem der Ansprüche 12 bis 17, **dadurch gekennzeichnet, dass** die Trägerelemente warmgewalzte Trägerelemente (102; 122) sind.
